# EUROPÄISCHE PATENTANMELDUNG

(11) **EP 4 841 040 A1**
(43) Veröffentlichungstag der Anmeldung: **18.11.2026**
(21) Anmeldenummer: 25176293.6
(22) Anmeldetag: 14.05.2025
(51) Int. Cl.: E04B 1/86, B32B 29/08, E04B 1/74, E04B 1/84, E04C 2/36

(54) **AKUSTIKPANEEL, VERFAHREN ZUR HERSTELLUNG EINES AKUSTIKPANEELS, VERWENDUNG EINES AKUSTIKPANEELS UND ANORDNUNG UMFASSEND ZUMINDEST ZWEI AKUSTIKPANEELE**

(71) Anmelder: Fritz Egger GmbH & Co. OG, 6380 St. Johann in Tirol (AT)
(72) Erfinder: Gerbl, Michael, 6380 St. Johann in Tirol (AT)
(74) Vertreter: Cohausz & Florack

(57) **Zusammenfassung**

Die Erfindung betrifft ein Akustikpaneel (2), mit einer Decklage (4), mit einer Mittellage (6), die eine schallabsorbierende Struktur (38) aufweist, und mit einer Rücklage (8), wobei die Decklage (4), die Mittellage (6) und die Rücklage (8) flächig übereinander angeordnet sind, wobei die Mittellage (6) zwischen der Decklage (4) und der Rücklage (8) angeordnet ist, wobei die Decklage (4) Lamellen (14) mit dazwischen ausgebildeten Schlitzen (10) aufweist, und wobei die Schlitze (10) unterschiedliche Schlitzbreiten (bsi) aufweisen. Die Erfindung betrifft weiterhin ein Verfahren zur Herstellung des beschriebenen Akustikpaneels oder einer Ausführungsform davon sowie die Verwendung des beschriebenen Akustikpaneels oder einer Ausführungsform davon und eine Anordnung umfassend zumindest zwei Akustikpaneele.

## Beschreibung

Die vorliegende Erfindung betrifft ein Akustikpaneel, mit einer Decklage, mit einer Mittellage, die eine schallabsorbierende Struktur aufweist, und mit einer Rücklage, wobei die Decklage, die Mittellage und die Rücklage flächig übereinander angeordnet sind, wobei die Mittellage zwischen der Decklage und der Rücklage angeordnet ist, und wobei die Decklage, insbesondere parallel angeordnete, Lamellen mit dazwischen ausgebildeten Schlitzen aufweist. Die vorliegende Erfindung betrifft weiter ein Verfahren zur Herstellung eines Akustikpaneels sowie die Verwendung eines Akustikpaneels und eine Anordnung umfassend zumindest zwei Akustikpaneele.

Aus dem Stand der Technik sind Akustikpaneele zur Wand- und/oder Deckenverkleidung bekannt. Die Akustikpaneele dienen der Verbesserung der Akustik in Räumen, indem sie an Wänden und/oder Decken angebracht werden, um den Schall zumindest teilweise zu absorbieren. Somit können Akustikpaneele dazu beitragen, die Geräuschpegel in einem Raum zu reduzieren und die Sprachverständlichkeit und die Klangqualität zu verbessern.

Typischerweise weisen bekannte Akustikpaneele eine Decklage auf, die mit einem Dekor versehen ist, beispielsweise in Form von parallel angeordneten Lamellen, die jeweils mit dem Dekor versehen sind, und in der regelmäßig angeordnete Schlitze, beispielsweise zwischen den Lamellen, zur Schallabsorption ausgebildet sind. Dabei weisen die Schlitze insbesondere durchgehend gleiche Schlitzbreiten auf.

Da Akustikpaneele typischerweise zumindest teilweise aus Papier und/oder Holz bzw. Holzwerkstoffen bestehen, unterliegen diese bei Änderungen der Raumfeuchte, wie sie beispielsweise durch den Jahreszeitenwechsel bedingt werden, Dimensionsänderungen. Durch derartige Dimensionsänderungen der Akustikpaneele aufgrund von Raumfeuchteänderungen ändern sich auch die Fugenbreiten zwischen den verlegten Akustikpaneelen. Dabei bezeichnet die Fugenbreite die Breite des Spalts zwischen den einzelnen Akustikpaneelen nach dem Verlegen.

Werden die Akustikpaneele mit einer bestimmten Fugenbreite verlegt, wird diese beispielsweise im Winter auf Grund der geringeren Temperaturen und geringeren absoluten Luftfeuchtigkeit größer und im Sommer auf Grund der höheren Temperaturen und der höheren absoluten Luftfeuchtigkeit kleiner.

Bei den bekannten Akustikpaneelen mit durchgehend gleicher Schlitzbreite können die beschriebenen Dimensionsänderungen einerseits zu einem optischen Makel führen. Denn eine optisch unauffällige Fuge kann durch die Dimensionsänderungen der Akustikpaneele plötzlich optisch auffällig werden. Andererseits können durch die Dimensionsänderungen bei Vorliegen von durchgehend gleichen Schlitzbreiten Krümmungserscheinungen auftreten, wenn die Fuge bereits komplett geschlossen ist und die Akustikpaneele dennoch weiteren Ausdehnungen unterliegen.

Weiterhin ist nachteilig an den Akustikpaneelen mit durchgehend gleicher Schlitzbreite, dass sie nur ein schmales Frequenzspektrum absorbieren, da die absorbierte Frequenz unter anderem von der Schlitzbreite abhängt.

Vor diesem Hintergrund liegt der vorliegenden Erfindung die Aufgabe zu Grunde, die Nachteile der zuvor beschriebenen bekannten Akustikpaneele zumindest teilweise zu beheben und insbesondere ein Akustikpaneel mit einer verbesserten Schallabsorption zur Verfügung zu stellen.

Die zuvor genannte Aufgabe wird erfindungsgemäß gelöst durch ein Akustikpaneel, mit einer Decklage, mit einer Mittellage, die eine schallabsorbierende Struktur aufweist, und mit einer Rücklage, wobei die Decklage, die Mittellage und die Rücklage flächig übereinander angeordnet sind, wobei die Mittellage zwischen der Decklage und der Rücklage angeordnet ist, wobei die Decklage, insbesondere parallel angeordnete, Lamellen mit dazwischen ausgebildeten Schlitzen aufweist, und wobei die Schlitze unterschiedliche Schlitzbreiten b_{Si} aufweisen.

Die zuvor genannte Aufgabe wird erfindungsgemäß weiterhin gelöst durch ein Verfahren zur Herstellung des beschriebenen Akustikpaneels oder einer Ausführungsform davon, bei dem die Decklage, die Mittellage und die Rücklage miteinander verbunden, insbesondere verklebt, werden, bei dem optional Ausnehmungen in die Unterseite der Rücklage eingebracht werden, und bei dem Schlitze in die Oberseite der Decklage eingebracht werden, wobei sich die Schlitze optional bis in die Mittellage erstrecken.

Insbesondere werden die Ausnehmungen in die Unterseite der Rücklage in Form von bevorzugt quer, d.h. im Wesentlichen rechtwinklig, zur Haupterstreckungsrichtung des Akustikpaneels verlaufenden Rückseitenschlitzen eingebracht. Entsprechend verlaufen die Ausnehmungen der Unterseite der Rücklage, bevorzugt die Rückseitenschlitze, insbesondere quer zur Haupterstreckungsrichtung. Die Haupterstreckungsrichtung bezeichnet dabei bevorzugt die Richtung, in die sich das Akustikpaneel am stärksten ausdehnt, also die längste Dimension des Akustikpaneels, besonders bevorzugt die Längsrichtung.

Darüber hinaus verlaufen bevorzugt die Schlitze der Decklage, und optional der Mittellage, sofern sie sich bis in diese erstrecken, parallel zur Haupterstreckungsrichtung des Akustikpaneels.

Insbesondere werden die beschriebenen Verfahrensschritte in der angegebenen Reihenfolge durchgeführt.

Bevorzugt werden bei dem Verfahren die Decklage, die Mittellage und die Rücklage miteinander verklebt. Das Verkleben kann beispielsweise durch ein Verpressen der Lagen miteinander, beispielsweise mittels eines Kaltpressverfahrens, hier bevorzugt mittels eines Zwei-Komponenten-Klebers, besonders bevorzugt mittels eines Zwei-Komponenten-Klebers auf Polyurethanbasis (PUR-Kleber), oder eines Heißpressverfahrens, erfolgen. Anschließend können optional, das heißt in dem Fall, dass Ausnehmungen in der Rücklage vorgesehen sind, die Ausnehmungen in die Rücklage eingebracht werden, bevorzugt mittels einer CNC-Maschine. Beispielsweise kann die Rücklage als Rohspanplatte ausgebildet sein, in die mittels einer CNC-Maschine Rückseitenschlitze eingebracht werden können.

In einem nächsten Schritt können dann die Schlitze in die Decklage und ggf. die Mittellage (wenn die Schlitztiefe so gewählt ist, dass sich die Schlitze bis in die Mittellage erstrecken), beispielsweise mittels eines Kreissägeblatts, eingebracht werden.

Es können jedoch auch zuerst die Schlitze in die Decklage und anschließend die Ausnehmungen in die Rücklage eingebracht werden.

Die zuvor genannte Aufgabe wird erfindungsgemäß außerdem gelöst durch die Verwendung des beschriebenen Akustikpaneels oder einer Ausführungsform davon als Raumverkleidung, insbesondere als (Trenn-)Wand- und/oder Deckenverkleidung. Die Ausrichtung eines Akustikpaneels an der Wand oder der Decke kann dabei sowohl vertikal als auch horizontal erfolgen. Bei der Verwendung als Verkleidung für (freistehende) Trennwände können die Akustikpaneele insbesondere beidseitig an den Trennwänden angebracht werden und diese somit beidseitig verkleiden.

Auf diese Weise wird ein Akustikpaneel zur Verfügung gestellt, bei dem die Decklage mit unterschiedlich breiten Schlitzen, das heißt mit Schlitzen mit unterschiedlichen Schlitzbreiten, versehen ist. Dabei sind die Schlitze zwischen, insbesondere parallel angeordneten, Lamellen oder Stegen der Decklage angeordnet. Unter parallel angeordneten Lamellen wird dabei verstanden, dass die Lamellen im Wesentlichen parallel zueinander angeordnet sind, das heißt Abweichungen einer parallelen Ausrichtung, beispielsweise um kleine Winkel, sind möglich. Insbesondere fügt sich die Fuge zwischen einzelnen, beispielsweise an der Wand oder der Decke verlegten oder montierten Akustikpaneelen nahtlos in dieses Schlitzmuster der Akustikpaneele ein.

Durch die Variation in der Schlitzbreite innerhalb des Akustikpaneels, also innerhalb eines einzelnen Akustikpaneels, werden feuchtebedingte Änderungen in den Dimensionen der Akustikpaneele und damit der Fugenbreite zwischen den Akustikpaneelen nicht oder nur stark vermindert, insbesondere nicht optisch störend, wahrgenommen.

Des Weiteren haben die unterschiedlichen Schlitzbreiten einen positiven Effekt auf die Schallabsorption, da unterschiedlich breite Schlitze unterschiedliche Frequenzen unterschiedlich gut absorbieren, sodass insgesamt ein breiteres Spektrum der Schallabsorption über die Frequenzen erreicht werden kann.

Weiterhin ist, bedingt durch die sehr guten Schallabsorptionseigenschaften und das breite Schallabsorptionsspektrum des Akustikpaneels mit unterschiedlichen Schlitzbreiten, auch eine direkte Montage des Akustikpaneels an einer Wand oder einer Decke, insbesondere ohne Unterkonstruktion, möglich.

Insbesondere besteht das Akustikpaneel, das heißt die Decklage, Mittellage und Rücklage, bevorzugt aus Holz- und/oder Papier-basierten Komponenten. Auf diese Weise kann ein geringes Gesamtgewicht des Akustikpaneels erreicht werden. Darüber hinaus kann ein solches Akustikpaneel aufgrund der Materialauswahl vorteilhaft recycelt werden.

Vorzugsweise sind ein oder mehrere Lagen des Akustikpaneels, insbesondere die Decklage, die Mittellage und/oder die Rücklage, jeweils in sich spannungsfrei ausgebildet. Zu diesem Zweck können die Decklage und/oder die Rücklage beispielsweise eine beidseitige Beschichtung aufweisen. Auf diese Weise kann das Akustikpaneel insgesamt, insbesondere trotz eines möglichen asymmetrischen Aufbaus, frei von Verzug gestaltet sein.

Die Schlitzbreiten, insbesondere der Decklage und/oder im Fall von als Rückseitenschlitze ausgebildeten Ausnehmungen der Rücklage, können zwischen 0,5 mm und 10 mm variieren, bevorzugt zwischen 2 mm und 5 mm. Die Schlitze, insbesondere der Decklage und/oder im Fall von als Rückseitenschlitze ausgebildeten Ausnehmungen der Rücklage, können entweder über die Länge des Akustikpaneels oder über die Breite des Akustikpaneels ausgebildet sein. Darüber hinaus können sich die Schlitze, insbesondere der Decklage und/oder im Fall von als Rückseitenschlitze ausgebildeten Ausnehmungen der Rücklage, auch lediglich bereichsweise über die Länge oder die Breite, das heißt nur über einen Teil der Länge oder Breite des Akustikpaneels, erstrecken.

Insbesondere können die Schlitze zumindest zwei unterschiedliche Schlitzbreiten b_{Si} aufweisen, so dass benachbarte Schlitze jeweils eine unterschiedliche Schlitzbreite aufweisen, also unterschiedlich breit sind. Weiterhin kann so beispielsweise eine alternierende Schlitzbreite für die Schlitze der Decklage gewählt werden. Dies ermöglicht eine besonders einfache Art der Herstellung der Decklage. Darüber hinaus kann eine Vielzahl, das heißt mehr als zwei, unterschiedliche Schlitzbreiten gewählt werden und/oder auch die Anordnung der verschiedenen Schlitzbreiten kann unregelmäßig gewählt werden.

Das Akustikpaneel kann als Wand- und/oder Deckenverkleidung verwendet werden. Insbesondere kann eine dekorative, zumindest an der die Sichtseite darstellende Oberseite beschichtete, Decklage verwendet werden. Die Schlitze in der Decklage dienen insbesondere dazu, den Schall in die schallabsorbierende Mittellage zu leiten.

Die Decklage, die Mittellage und die Rücklage sind flächig übereinander angeordnet, das heißt sie sind bevorzugt flächig aneinander angrenzend angeordnet und können somit eine gestapelte Anordnung darstellen. Insbesondere ist dabei die Mittellage in der Mitte des Stapels oberhalb der Rücklage und unterhalb der Decklage angeordnet. Insbesondere bilden somit die Oberseite der Decklage und die Rückseite der Rücklage nach außen sichtbare Flächen des Akustikpaneels.

Bevorzugt weist ein Akustikpaneel eine Breite zwischen 100 mm und 800 mm, eine Länge zwischen 1000 mm und 5200 mm und eine Dicke zwischen 19 mm und 70 mm auf. Besonders bevorzugt weist ein Akustikpaneel eine Breite von 280 mm, eine Länge von 2700 mm und eine Dicke von 42 mm auf. Durch die Länge von 2700 mm lassen sich vorteilhaft auch Wände von hohen Räumen ohne Querstöße von Akustikpaneelen über die Höhe der Wand verkleiden.

Optional kann das Akustikpaneel mit einem Kantenband (auch als Kantenprofil oder Kantenschutz bezeichnet) versehen sein. Auf diese Weise können die Kanten des Akustikpaneels insbesondere vor Beschädigungen wie Absplittern oder Abnutzung geschützt werden.

Die zuvor genannte Aufgabe wird erfindungsgemäß weiterhin gelöst durch eine Anordnung umfassend zumindest zwei Akustikpaneele, wobei die Akustikpaneele jeweils nach einem zuvor beschriebenen Akustikpaneel oder einer Ausführungsform davon ausgebildet sind, und wobei jeweils zwei Akustikpaneele der zumindest zwei Akustikpaneele derart zueinander angeordnet sind, dass sich zwischen den Akustikpaneelen eine Fuge mit einer Fugenbreite ergibt, die einer Schlitzbreite b_{Si} der unterschiedlichen Schlitzbreiten b_{Si} der Schlitze entspricht.

Für die Anordnung ergeben sich die bereits zuvor für das Akustikpaneel und dessen Verwendung beschriebenen technischen Wirkungen und Vorteile entsprechend. Insbesondere kann sich bei der beschriebenen Anordnung umfassend zumindest zwei Akustikpaneele die Fuge zwischen jeweils zwei zueinander angeordneten Akustikpaneelen nahtlos in das Schlitzmuster der unterschiedlichen Schlitzbreiten der Schlitze der Akustikpaneele einfügen. Bevorzugt sind bei der Anordnung die zumindest zwei Akustikpaneele derart zueinander angeordnet, dass sich durch die Anordnung der Akustikpaneele eine durchgehende und als eine Einheit wirkende Verkleidung, insbesondere (Trenn-)Wand- oder Deckenverkleidung, ergibt. Insbesondere sind die zumindest zwei Akustikpaneele dabei derart angeordnet und ausgerichtet, dass sich durch eine einheitliche Lamellenrichtung ein einheitlicher Strukturverlauf ergibt, indem die Lamellen durchgängig in eine Richtung verlaufen. Somit kann die durch die Anordnung gebildete Oberfläche aus Akustikpaneelen vorteilhaft als optische Einheit wirken. Weiter bevorzugt sind bei einer optional vorhandenen Maserung (Dekor oder Lamellenstruktur), insbesondere der Decklage eines Akustikpaneels, die Akustikpaneele derart zueinander angeordnet, dass das Dekor über die zumindest zwei Akustikpaneele hinweg fortgesetzt wird.

Im Folgenden werden verschiedene weitere Ausführungsformen des Akustikpaneels, des Verfahrens, der Verwendung und der Anordnung beschrieben, wobei die einzelnen Ausführungsformen jeweils unabhängig voneinander für das Akustikpaneel, das Verfahren, die Verwendung und die Anordnung gelten. Darüber hinaus können die einzelnen Ausführungsformen beliebig miteinander kombiniert werden.

Bei einer Ausführungsform des Akustikpaneels weisen die Schlitze zumindest drei unterschiedliche Schlitzbreiten b_{Si} auf. Beispielsweise können die Schlitze drei unterschiedliche Schlitzbreiten b_{S1}, b_{S2} und b_{S3} aufweisen, wobei b_{S1}, b_{S2} und b_{S3} jeweils unterschiedliche Werte für die Schlitzbreite (beispielsweise in mm) darstellen. Auf diese Weise kann bedingt durch die größere Variabilität in der Schlitzbreite eine besonders effektive Schallabsorption erreicht werden. Auch können Dimensionsänderungen so besonders vorteilhaft optisch kaschiert werden.

Bei einer weiteren Ausführungsform des Akustikpaneels weisen die Lamellen der Decklage eine Breite b_{L} zwischen 5 mm und 70 mm, bevorzugt zwischen 10 mm und 30 mm, besonders bevorzugt von 20 mm, auf. Auf diese Weise wird vorteilhaft durch die, insbesondere ein Dekor aufweisende Decklage, durch die Lamellen des Akustikpaneels eine dekorative Wirkung des Akustikpaneels erreicht.

Bei einer weiteren Ausführungsform des Akustikpaneels ist die Decklage zumindest an ihrer Oberseite, bevorzugt beidseitig, beschichtet. Unter der Oberseite der Decklage wird die der Rücklage abgewandte Seite der Decklage verstanden. Insbesondere kann die Oberseite der Decklage die (vordere) Sichtseite des Akustikpaneels darstellen. Auf diese Weise kann die Decklage vorteilhaft mit einem Dekor versehen sein. Weiterhin kann eine Beschichtung dem Schutz der Decklage dienen, beispielsweise dem Feuchtigkeitsschutz oder Schutz vor Verschleiß.

Darüber hinaus kann eine Beschichtung das Erscheinungsbild des Akustikpaneels verbessern, indem die Beschichtung eine glänzende oder matte Oberfläche bieten und die natürliche Holzmaserung oder andere Muster hervorheben kann. Als Beschichtung kann beispielsweise Melaminharz oder Lack (UV-Lack oder Polyurethanlack) verwendet werden.

Die Decklage ist vorzugsweise mindestens einseitig, weiter bevorzugt beidseitig beschichtet. Eine beidseitige Beschichtung verhindert einen Verzug des Gesamtaufbaus. Die Decklage kann auch nur einseitig, insbesondere dekorativ, beschichtet sein. Um Verzug zu vermeiden kann auf der Rückseite der Decklage in diesem Fall ein Gegenzug angebracht werden. Bei der Rückseite der Decklage handelt es sich um die der Oberseite der Decklage gegenüberliegende Seite. Die Rückseite der Decklage ist der Mittelage zugewandt.

Besonders bevorzugt wird die Decklage durch eine beidseitig beschichtete Spanplatte gebildet. Die Spanplatte kann beispielsweise eine Dicke von 8 mm aufweisen.

Optional kann die Decklage als schwer entflammbare Platte Klasse B-s1, d0 gemäß der Norm EN 13501-1:2018 ausgeführt sein, so dass vorteilhaft bestimmte Anforderungen an Brandschutz und Rauchentwicklung durch die Decklage erfüllt werden.

Bei einer weiteren Ausführungsform des Akustikpaneels weist die Decklage eine Dicke d_{L} zwischen 3 mm und 38 mm, bevorzugt zwischen 5 mm und 10 mm, besonders bevorzugt von 8 mm, auf.

Je dünner die Decklage ausgeführt ist, desto besser ist die akustische Wirkung, das heißt die Schallabsorption, des Akustikpaneels, da der auftretende Raumschall so am schnellsten in der schallabsorbierenden Mittellage absorbiert wird. Dickere Decklagen können dagegen eine schlechtere akustische Wirkung aufweisen. Dickere Decklagen weisen außerdem ein höheres Gewicht auf, welches sich ebenfalls negativ auf die Handhabung des Akustikpaneels auswirkt, beispielsweise kann sich die Montage aufwendiger gestalten. Durch dünnere Decklagen ist der optische Effekt des Akustikpaneels jedoch beeinträchtigt, da die Mittellage stärker durch die Schlitze der Decklage durchscheint. Bei einer dickeren Decklage dagegen, wird die Mittellage durch den Schatteneffekt der Decklage kaschiert.

Die angegebenen Dickenbereiche, insbesondere die als bevorzugt und besonders bevorzugt angegebenen Dicken d_{L}, stellen daher einen guten Kompromiss zwischen den akustischen und den optischen Eigenschaften sowie einer guten Handhabbarkeit dar. Darüber hinaus sind für die bevorzugt angegebenen Bereiche der Dicke d_{L}, insbesondere für eine Dicke von 8 mm, auch herkömmliche Befestigungsmittel wie beispielsweise Schrauben z.B. zur Befestigung von dekorativen Elementen wie Bildern gut einsetzbar.

Bei einer weiteren Ausführungsform des Akustikpaneels weisen die Schlitze Schlitzbreiten b_{Si} zwischen 0,5 mm und 10 mm, bevorzugt zwischen 2 mm und 5 mm, besonders bevorzugt von 4 mm, 3,2 mm oder 2,7 mm, auf. Insbesondere weisen die Schlitze drei verschiedene Schlitzbreiten b_{Si} von 4 mm, 3,2 mm und 2,7 mm, auf, so dass eine erste Schlitzbreite b_{S1} 4 mm beträgt, eine zweite Schlitzbreite b_{S2} 3,2 mm und eine dritte Schlitzbreite b_{S3} 2,7 mm. Die angegebenen bevorzugten Schlitzbreiten haben sich insbesondere als vorteilhaft zur Kaschierung optischer Makel bei feuchtebedingten Dimensionsänderungen gezeigt. Darüber hinaus ist es möglich, beispielsweise bei einer Schlitzbreite von 4 mm, LED-Bänder zur Raumbeleuchtung in die Schlitze einzuklemmen.

Bei einer weiteren Ausführungsform des Akustikpaneels sind die unterschiedlichen Schlitzbreiten b_{Si} der Schlitze 10 derart ausgebildet, dass die Abfolge aufeinanderfolgender Schlitzbreiten b_{Si} entsprechend dem sich wiederholenden Muster b_{S1}, b_{S2}, b_{S1}, b_{S3} gewählt ist, wobei b_{S1} > b_{S2} > b_{S3} gilt. Insbesondere setzt sich das Muster über die Abfolge der Schlitzbreiten b_{Si} entsprechend weiter fort, bevorzugt ergibt sich dabei folgendes Muster: b_{S1}, b_{S2}, b_{S1}, b_{S3}, b_{S1}, b_{S2}, b_{S1}, b_{S3}, .... Entsprechend ist die Abfolge aufeinanderfolgender Schlitzbreiten bevorzugt so gewählt, dass auf einen Schlitz aufweisend eine erste (größere) Schlitzbreite b_{S1} ein Schlitz mit einer im Vergleich zur ersten Schlitzbreite kleineren zweiten Schlitzbreite b_{S2} folgt, auf den Schlitz mit der beschriebenen (mittleren) zweiten Schlitzbreite b_{S2} wiederum ein Schlitz mit der ersten Schlitzbreite b_{S1} und auf diesen zweiten Schlitz mit der ersten Schlitzbreite b_{S1} ein Schlitz mit einer im Vergleich zur zweiten Schlitzbreite kleineren Schlitzbreite b_{S3}, wobei sich dieses Muster beliebig oft, bevorzugt mindestens zwei Mal, besonders bevorzugt mindestens fünf Mal, wiederholt und so eine stetige Abfolge von sich wiederholenden Schlitzbreiten entsteht.

Bei einer weiteren Ausführungsform des Akustikpaneels sind die unterschiedlichen Schlitzbreiten b_{Si} der Schlitze weiter derart ausgebildet, dass der in einer Richtung im Wesentlichen senkrecht zur Erstreckungsrichtung der Schlitze erste Schlitz eine erste Schlitzbreite b_{S1} aufweist und der in dieser Richtung nachfolgend angeordnete Schlitz eine zweite Schlitzbreite b_{S2}, und optional ist die Abfolge der Schlitzbreiten b_{Si} relativ zum mittig angeordneten Schlitz mit der zweiten Schlitzbreite b_{S2} des Akustikpaneels spiegelsymmetrisch gewählt. Insbesondere sind dabei die erste und die zweite Schlitzbreite unterschiedlich voneinander gewählt. Weiterhin kann die Abfolge wiederum entsprechend dem sich wiederholenden Muster b_{S1}, b_{S2}, b_{S1}, b_{S3}, ... gewählt werden, so dass jeweils an den Rändern des Akustikpaneels Schlitze mit Schlitzbreite b_{S1} angeordnet sind.

Insbesondere können bei der Anordnung die jeweils zwei Akustikpaneele derart zueinander angeordnet sein, dass sich zwischen den Akustikpaneelen eine Fuge mit einer Fugenbreite ergibt, die einer Schlitzbreite b_{S3} entspricht. Auf diese Weise fügt sich jeweils am Rand eines Akustikpaneels die Fuge mit Fugenbreite b_{S3} nahtlos in das sich wiederholende Muster b_{S1}, b_{S2}, b_{S1}, b_{S3} der Schlitzbreiten b_{Si} der Schlitze ein.

Entsprechend kann die Abfolge der Schlitzbreiten b_{Si} bevorzugt so gewählt werden, dass die Abfolge der Schlitzbreiten b_{Si} an einem Rand des Akustikpaneels jeweils mit einem Schlitz größerer Breite b_{S1} beginnt auf den ein Schlitz mittlerer Breite b_{S2} und sodann wieder ein Schlitz größerer Breite b_{S1} folgt, auf den ein Schlitz kleinerer Breite b_{S3} folgt. Es ergibt sich somit relativ zur Mitte des Akustikpaneels, insbesondere zu einem mittig angeordneten Schlitz mit Schlitzbreite b_{S2}, eine spiegelsymmetrische Anordnung der Schlitzbreiten.

Auf diese Weise kann sich eine Schlitzbreite oder Fugenspalte zwischen zwei Akustikpaneelen, die einer kleineren Schlitzbreite, beispielsweise b_{S3} = 2,7 mm, entspricht, in die stetige Abfolge von Schlitzbreiten einfügen. Vorteilhaft weist so eine Fläche aus mehreren nebeneinander angeordneten Akustikpaneelen, beispielsweise eine Anordnung umfassend mindestens zwei oder mehr Akustikpaneele, eine stetige Abfolge von Schlitzbreiten auf.

Beispielsweise können in die Decklage, bevorzugt durchgehend über die Länge, Schlitze in drei verschiedenen Schlitzbreiten, insbesondere 2,7 mm, 3,2 mm und 4,0 mm, eingebracht werden. Dazwischen bleiben die Lamellen der Decklage, bevorzugt als Streifen, beispielsweise 20 mm breite Streifen, stehen. Vorteilhaft kann jeder zweite Schlitz dieselbe Schlitzbreite, beispielsweise eine Schlitzbreite b_{S1} von 4,0 mm, aufweisen, und die zwei weiteren Schlitzbreiten bₛ₂, bₛ₃, beispielsweise mit b_{S2} = 2,7 mm und b_{S3} = 3,2 mm, können sich abwechseln, so dass bezogen auf die Reihenfolge der Schlitzbreite (mit dazwischen stehenden Lamellen), sich vorteilhaft folgendes Muster ergibt: b_{S1}, b_{S2}, b_{S1}, b_{S3}, b_{S1}, b_{S2}, b_{S1}, b_{S3}, usw.. Bei einem Stoß von zwei Akustikpaneelen entstehen beispielsweise bei der Verwendung von Profilkrallen zur Montage der Akustikpaneele auf einer Unterkonstruktion Fugenbreiten von 2,7 mm. Entsprechend sind vorteilhaft bei der Anordnung die jeweils zwei Akustikpaneele derart zueinander angeordnet, dass sich zwischen den Akustikpaneelen eine Fuge mit einer Fugenbreite von b_{Si}, beispielsweise von b_{S3}, insbesondere von b_{S3} = 2,7 mm, ergibt. Umfasst die Anordnung weiter zumindest eine Profilkralle, kann diese vorteilhaft so ausgebildet sein, dass sie die Fuge zwischen zwei Akustikpaneelen auf eine Fugenbreite festlegt, die einer Schlitzbreite von b_{Si}, beispielsweise von b_{S3}, insbesondere von b_{S3} = 2,7 mm, entspricht.

Durch die beschriebene Wahl der Schlitzbreiten fügt sich auf diese Weise die Stoßfuge nahtlos in das Muster der Schlitzbreiten ein und der Stoß zweier Akustikpaneele ist im montierten Zustand nicht mehr erkennbar. Darüber hinaus wird so besonders vorteilhaft die Änderung der Fugenbreite bei durch Feuchteschwankungen bedingten Dimensionsänderungen der Akustikpaneele kaschiert.

Darüber hinaus ergibt sich bevorzugt durch die beschriebene Abfolge der unterschiedlichen Schlitzbreiten ein symmetrischer Aufbau. Insbesondere können die Schlitzbreiten der Abfolge so gewählt werden, dass sich beispielsweise ein 3,2 mm breiter Schlitz, das heißt ein Schlitz mit einer Schlitzbreite von b_{S3} = 3,2 mm, in der Mitte des Akustikpaneels befindet und sich zu beiden Seiten ein symmetrisches Muster aus Lamellen und Schlitzbreiten ergibt.

Bei einer weiteren Ausführungsform des Akustikpaneels erstrecken sich die Schlitze durch die Decklage in die Mittellage. Entsprechend weisen gemäß dieser Ausführungsform die Schlitze eine Schlitztiefe ts auf, die größer ist als die Dicke d_{L} der Decklage, insbesondere die Dicke der Lamellen der Decklage. Daneben ist auch möglich, dass die Schlitztiefe ts so gewählt wird, dass sie höchstens der Dicke d_{L} der Decklage entspricht und somit die Schlitze nicht bis in die Mittellage reichen.

Bevorzugt beträgt die Schlitztiefe ts zwischen 15 und 25 mm, besonders bevorzugt 21 mm. Die Schlitztiefe ts kann aber, entsprechend der zuvor beschriebenen besonders bevorzugten Dicke der Decklage von 8 mm, auch lediglich der Dicke der Decklage, also beispielsweise 8 mm, oder weniger betragen.

Je tiefer die Schlitze gewählt werden, das heißt, je größer die Schlitztiefe ist, desto besser ist die akustische Wirkung des Akustikpaneels. Darüber hinaus ist die Ansicht der Mittellage mit tiefen Schlitzen über die Schattenwirkung besser kaschiert. Allerdings kann durch besonders große Schlitztiefen die Stabilität des Akustikpaneels verringert sein. Für die beschriebenen bevorzugten Schlitztiefen wurde herausgefunden, dass diese einen guten Kompromiss zwischen verbesserter akustischer Wirkung und Schattenwirkung und Stabilität darstellen.

Die Dicke der Mittellage ist bevorzugt zwischen 10 mm und 50 mm gewählt und beträgt besonders bevorzugt 30 mm. Je dünner die Mittellage ausgestaltet ist, desto schlechter ist die akustische Wirkung. Je dicker die Mittellage ausgestaltet ist, desto besser ist die akustische Wirkung. Allerdings bedingt eine dickere Mittellage auch ein größeres Gesamtvolumen des Akustikpaneels. Die als bevorzugt angegebenen Dicken der Mittellage haben sich daher als guter Kompromiss erwiesen.

Bei einer weiteren Ausführungsform des Akustikpaneels weist die Mittellage eine Wabenstruktur auf. Auf diese Weise lässt sich besonders vorteilhaft eine schallabsorbierende Wirkung durch die Mittellage erzielen.

Bevorzugt wird als Mittellage eine, insbesondere 30 mm dicke, Sinuswabenplatte, besonders bevorzugt aus Papier oder Karton eingesetzt. Alternativ kann jede andere poröse bzw. schallabsorbierende Lage eingesetzt werden. Beispielsweise kann auch eine sogenannte Honeycomb-Mittellage (deutsch: Honigwaben-Mittellage), bevorzugt aus Papier oder Karton, verwendet werden. Weiterhin kann auch eine Holzfaserdämmplatte als Mittellage eingesetzt werden.

Eine Sinuswabenplatte lässt sich beschreiben durch eine alternierende Anordnung aus geraden Lagen, beispielsweise Papierlagen, und sinusförmigen Lagen, beispielsweise Papierlagen. Entsprechend wechseln die geraden Lagen und die sinusförmigen Lagen sich ab, so dass sich zwischen den Lagen Hohlräume oder Waben ergeben. Diese Hohlräume sind bevorzugt zur Oberseite der Mittellage, das heißt zu der der Decklage zugewandten Seite der Mittellage, und zur Rückseite der Mittellage geöffnet, erstrecken sich also in Richtung orthogonal zur Ebene der Längs- und Breitenerstreckung der Mittellage durch diese hindurch. Bei einer solchen Sinuswabenplatte als Mittellage verlaufen die Lamellen der Decklage bevorzugt parallel zur Richtung der geraden Lagen in der Sinuswabenplatte.

Bei einer weiteren Ausführungsform des Akustikpaneels besteht die Mittellage im Wesentlichen aus einem Papier-basierten Material. Beispielsweise besteht die Mittellage aus Papier oder Karton. Auf diese Weise kann ein nachhaltiges und recycelbares Material verwendet und außerdem ein geringes Gewicht für das Akustikpaneel erreicht werden.

Bevorzugt ist die Mittellage zumindest an der Oberseite, insbesondere vollflächig, mit einer Abdecklage beklebt. Die Oberseite der Mittellage bezeichnet dabei die Seite, die der Decklage zugewandt ist. Insbesondere kann die Mittellage an der Oberseite vollflächig mit Papier als Abdecklage beklebt sein. Auf diese Weise kann, wenn die Mittellage beispielsweise eine Wabenstruktur aufweist, die Mittellage des Abdeckpaneels bei der Herstellung des Akustikpaneels besser manipuliert, beispielsweise mit einem Vakuumheber angehoben werden. Denn die insbesondere vollflächige Beklebung dient der Verschließung etwaiger offenporiger Strukturen wie Waben, die ansonsten ein Anheben mittels Vakuumheber verhindern würden. Dabei wurde weiterhin herausgefunden, dass dieses Bekleben an zumindest der Oberseite keine nachteiligen Auswirkungen auf das gefertigte Akustikpaneel hat.

Bei einer weiteren Ausführungsform des Akustikpaneels besteht die Decklage im Wesentlichen aus einem Holz- und/oder Papier-basiertem Material, insbesondere ist die Decklage als beschichtete, bevorzugt beidseitig beschichtete, Spanplatte ausgebildet. Somit kann die Decklage beispielsweise als, insbesondere beidseitig beschichtete, Spanplatte ausgebildet sein oder im Wesentlichen aus Holz, Holzfurnier einer, insbesondere beschichteten, Faserplatte, einer Kompaktplatte oder Schichtstoffplatte, Schichtstoffverbundplatte, einer, insbesondere dekorativen, OSB-Platte, einer anderen Holzwerkstoffplatte o.ä. bestehen.

Bei einer weiteren Ausführungsform des Akustikpaneels besteht die Rücklage im Wesentlichen aus einem Holz- und/oder Papier-basiertem Material, insbesondere ist die Rücklage als unbeschichtete Spanplatte ausgebildet. Somit kann die Rücklage beispielsweise als, insbesondere unbeschichtete, (Roh-)Spanplatte oder als HFD (Holzfaserdämmplatte), MDF (medium density fiberboard) oder HDF (high density fiberboard) ausgeführt sein.

Auf diese Weise kann bevorzugt auch für die Decklage und/oder Rücklage ein nachhaltiges und recycelbares Material verwendet und außerdem ein geringes Gewicht für das Akustikpaneel erreicht werden.

Bei einer weiteren Ausführungsform des Akustikpaneels weist die Rücklage eine Dicke d_{R} zwischen 2 mm und 30 mm, bevorzugt zwischen 2 mm und 10 mm, besonders bevorzugt von 4 mm, auf.

Bevorzugt besteht die Rücklage aus einer, insbesondere 4 mm dicken, unbeschichteten Rohspanplatte. Durch diese Konfiguration ist der Aufbau spannungsfrei und es kommt zu keinem nennenswerten Verzug. Alternativ kann die Rücklage auch beschichtet ausgeführt sein.

Bei einer weiteren Ausführungsform des Akustikpaneels weist die Rücklage zumindest bereichsweise Ausnehmungen auf. Ausnehmungen in der Rücklage des Akustikpaneels können weiterhin zur akustischen Wirkung des Akustikpaneels beitragen. Durch die Ausnehmungen der Rücklage kann eine Unterkonstruktion, die zur Montage des Akustikpaneels bevorzugt verwendet wird, ebenfalls als Absorptionsvolumen genutzt werden (im Gegensatz zu einer durchgängig geschlossenen Rücklage). Dadurch wird besonders die Schallabsorption im tieferen Frequenzbereich positiv beeinflusst.

Insbesondere erstrecken sich die Ausnehmungen in der Rücklage zumindest durch die gesamte Rücklage, d.h. bis zur Mittellage, und können sich optional bis in die Mittellage erstrecken. Durch die Erstreckung der Ausnehmungen zumindest durch die Rücklage und bis zur Mittellage kann der Schall aus der Mittellage aufgenommen und in eine optional verwendete Unterkonstruktion geleitet werden. Auf diese Weise kann eine besonders effektive Schallabsorption durch das Akustikpaneel erreicht werden.

Insbesondere handelt es sich bei den Ausnehmungen der Rücklage um regelmäßig angeordnete Ausnehmungen, insbesondere Rückseitenschlitze oder Bohrungen mit gleichbleibenden Dimensionen. Alternativ können auch Anordnungen mit Ausnehmungen mit variierenden Dimensionen, beispielswiese Rückseitenschlitze mit unterschiedlichen Schlitzbreiten, vorgesehen sein.

Bevorzugt sind, bei der Ausgestaltung der Ausnehmungen als Rückseitenschlitze, die Rückseitenschlitze im Wesentlichen im rechten Winkel zur Längserstreckung des Akustikpaneels, insbesondere also zur Haupterstreckungsrichtung des Akustikpaneels, orientiert. Weiterhin sind die Schlitze der Decklage bevorzugt im Wesentlichen parallel zur Längserstreckung des Akustikpaneels orientiert. Diese Orientierung der Schlitze der Decklage relativ zu den Rückseitenschlitzen der Rücklage im Wesentlichen im rechten Winkel erhöht die Stabilität des Aufbaus des Akustikpaneels im Vergleich zu einer parallelen Orientierung der Schlitze relativ zu den Rückseitenschlitzen.

Insbesondere beträgt bei dem Vorsehen von Rückseitenschlitzen die Breite der Rückseitenschlitze zwischen 0,5 mm und 10 mm, bevorzugt zwischen 2 mm und 5 mm, besonders bevorzugt 3 mm. Weiterhin bleiben zwischen den Rückseitenschlitzen bevorzugt Stege von 7 mm Breite bestehen.

Die Tiefe der Ausnehmungen der Rücklage entspricht bevorzugt der Dicke der Rücklage, beispielsweise bevorzugt 4 mm. Die rückseitigen Ausnehmungen reichen also bevorzugt nicht in die Mittellage hinein. Dadurch wird die Stabilität des Aufbaus des Akustikpaneels erhöht, denn bei tieferen Ausnehmungen, die auch in die Mittellage hineinreichen, kann sich das Akustikpaneel stärker verziehen. Außerdem bewirkt eine Erhöhung der Tiefe der Ausnehmungen in der Rücklage keine weitere Verbesserung der schallabsorbierenden Wirkung. Grundsätzlich kann aber auch vorgesehen sein, dass die Ausnehmungen bis in die Mittellage hineinreichen und die Tiefe der Ausnehmungen entsprechend gewählt wird.

Die Ausnehmungen der Rücklage können auch als Bohrungen mit einem Durchmesser von bevorzugt 8 mm und einem Rasterabstand von bevorzugt 16 mm eingebracht werden. Dadurch verbessern sich die Schallabsorptionswerte im mittleren Frequenzbereich.

Die Ausnehmungen in der Rücklage können sich auch lediglich bereichsweise über die Länge oder die Breite, das heißt nur über einen Teil der Länge oder Breite des Akustikpaneels, erstrecken. Die Ausnehmungen in der Rücklage werden entsprechend bevorzugt nur in bestimmten, beispielsweise vier, Bereichen der Rücklage eingebracht. Dazwischen bleiben Bereiche ohne Ausnehmungen stehen. Bevorzugt weist die Rücklage somit lediglich bereichsweise Ausnehmungen auf. Auf diese Weise kann die Handhabung oder Manipulation der Rücklage und somit auch des Akustikpaneels vereinfacht werden. Beispielsweise lässt sich durch das Vorsehen von Bereichen ohne Ausnehmungen die Rücklage bzw. das Akustikpaneel durch einen Vakuumheber anheben.

Es kann allerdings auch vorgesehen sein, dass über die gesamte Rückseite Ausnehmungen vorgesehen sind.

Bei einer Ausführungsform der Verwendung des Akustikpaneels erfolgt die Befestigung des Akustikpaneels an einer Unterkonstruktion mittels Profilkrallen. Durch diese Art der Befestigung hat das Akustikpaneel noch bestimmte Bewegungsmöglichkeiten und kann dadurch Dimensionsänderungen bedingt z.B. durch Raumfeuchteänderungen noch bis zu einem gewissen Grad zwängungsfrei ausführen, ohne dass es - wie bei fixen Befestigungen wie beispielsweise mit Schrauben - zu Krümmungen kommt. Profilkrallen werden auch Fugenkrallen genannt, ein Beispiel einer vorteilhaft verwendbaren Profilkralle ist eine Profilschraubenkralle Nut-Nut-Profil FSK-0-7-3-100.

Bei einer Ausführungsform der Anordnung umfasst die Anordnung weiter zumindest eine Profilkralle, die derart ausgebildet ist, dass sie die Fuge zwischen zwei Akustikpaneelen auf eine Fugenbreite festlegt, die einer Schlitzbreite b_{Si} der unterschiedlichen Schlitzbreiten b_{Si} der Schlitze entspricht. Beispielsweise kann die Anordnung eine Profilkralle wie eine FSK-Profilkralle umfassen, die der Befestigung von zumindest zwei Akustikpaneelen, insbesondere an einer Unterkonstruktion, dient. Weiter kann die Profikralle insbesondere durch ihre Geometrie oder Form den Abstand zwischen den zwei Akustikpaneelen und somit die Fugenbreite der Fuge zwischen den zwei Akustikpaneelen festlegen. Beispielsweise kann die Profilkralle derart ausgebildet sein, dass sie ein Akustikpaneel fixiert, indem sie in eine Nut des Akustikpaneels, insbesondere eine Nut am Rand des Akustikpaneels, beispielsweise eine seitliche Längsnut, eingreift. Zu diesem Zweck kann das Akustikpaneel zumindest eine entsprechende Nut an zumindest einem Rand aufweisen. Weiterhin kann die Profilkralle insbesondere als FSK-Profilkralle, beispielsweise eine Profilschraubenkralle Nut-Nut-Profil FSK-0-7-3-100, ausgebildet sein.

Insbesondere erfolgt die Befestigung des Akustikpaneels an einer Unterkonstruktion mittels Profilkrallen derart, dass die zwischen den Akustikpaneelen entstehenden Fugen oder Schlitze in ihrer Breite bevorzugt in eine stetige Abfolge der Schlitzbreiten der Akustikpaneele passen. Auf diese Weise lässt sich ein Stoß zweier Akustikpaneele besonders vorteilhaft kaschieren, so dass die Fuge zwischen zwei Akustikpaneelen insbesondere kaum oder nicht auffällt.

Darüber hinaus erfolgt die Befestigung des Akustikpaneels beispielsweise bevorzugt an einer Unterkonstruktion aus Holz oder Aluminium, beispielsweise an Holzlatten oder Aluminiumprofilen. Weiterhin kann die Unterkonstruktion mit Dämmmaterial wie beispielsweise Mineralwolle gefüllt werden.

Weitere Merkmale und Vorteile des Akustikpaneels, des Verfahrens, der Verwendung und der Anordnung ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel eines erfindungsgemäßen Akustikpaneels in einer perspektivischen Ansicht,
- Fig. 2: das Akustikpaneel nach Fig. 1 in einer Schnittansicht,
- Fig. 3a-b: Ausführungsbeispiele von Mittellagen eines erfindungsgemäßen Akustikpaneels jeweils in einer perspektivischen Ansicht, und
- Fig. 4: ein Ausführungsbeispiel einer Rücklage eines erfindungsgemäßen Akustikpaneels in einer Draufsicht von der Rückseite.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

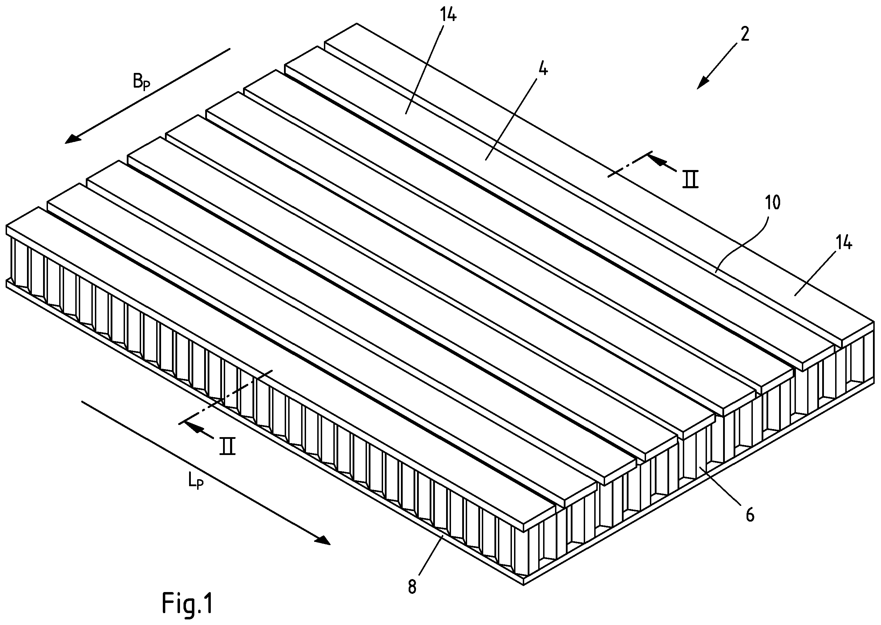

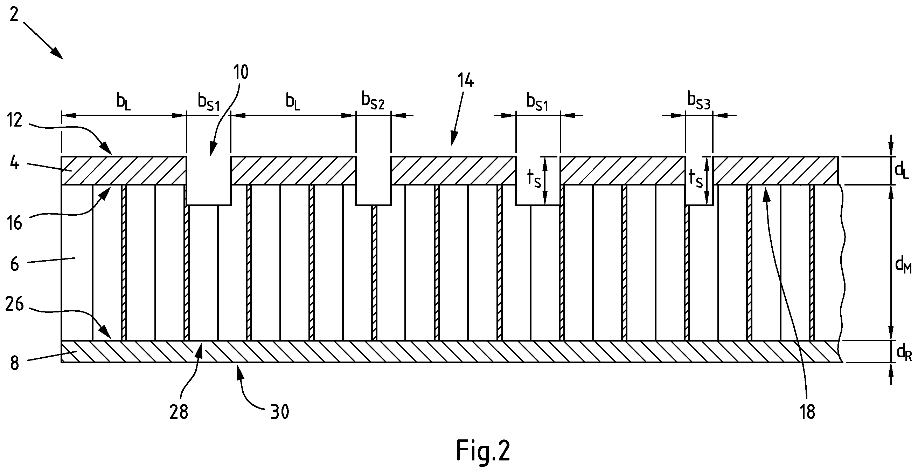

Fig. 1 zeigt zunächst ein Ausführungsbeispiel eines erfindungsgemäßen Akustikpaneels 2 in einer perspektivischen Ansicht. Und zwar zeigt Fig. 1 ein Akustikpaneel 2, mit einer Decklage 4, mit einer Mittellage 6, die eine schallabsorbierende Struktur aufweist, und mit einer Rücklage 8, wobei die Decklage 4, die Mittellage 6 und die Rücklage 8 flächig übereinander angeordnet sind, wobei die Mittellage 6 zwischen der Decklage 4 und der Rücklage 8 angeordnet ist, und wobei die Decklage 4, insbesondere parallel angeordnete, Lamellen 14 mit dazwischen ausgebildeten Schlitzen 10 aufweist. Die Schlitze weisen unterschiedliche Schlitzbreiten b_{Si} auf, wie insbesondere in Fig. 2 erkennbar ist. Weiterhin ist in Fig. 1 erkennbar, dass sich die Schlitze 10 parallel zur Längsrichtung L_{P} des Akustikpaneels 2 und somit senkrecht zur Breite B_{P} des Akustikpaneels 2 erstrecken.

Fig. 2 zeigt das Akustikpaneel 2 nach Fig. 1 in einer Schnittansicht entsprechend der in Fig. 1 mit "II" bezeichneten Schnittebene. Während die Lamellen 14 eine gleichbleibende Breite b_{L} aufweisen, ist dargestellt, dass die Schlitze 10 unterschiedliche Schlitzbreiten b_{Si} aufweisen. In dem gezeigten Beispiel weisen die Schlitze 10 zumindest drei unterschiedliche Schlitzbreiten b_{Si} auf. Die Schlitze 10 weisen hier die drei unterschiedlichen Schlitzbreiten b_{S1}, b_{S2} und b_{S3} auf, wobei b_{S1}, b_{S2} und b_{S3} jeweils unterschiedliche Werte für die Schlitzbreite darstellen: eine erste Schlitzbreite b_{S1} beträgt 4 mm, eine zweite Schlitzbreite b_{S2} 3,2 mm und eine dritte Schlitzbreite b_{S3} 2,7 mm. Dazwischen bleiben die Lamellen 14 der Decklage 4 als jeweils 20 mm breite Streifen stehen.

Jeder zweite Schlitz 10 weist eine Schlitzbreite b_{S1} von 4,0 mm auf und die Schlitzbreiten b_{S2} = 3,2 mm und b_{S3} = 2,7 mm wechseln sich ab, so dass bezogen auf die Reihenfolge der Schlitzbreite (mit dazwischen stehenden Lamellen 14), sich folgendes Muster ergibt: b_{S1}, b_{S2}, b_{S1}, b_{S3}, b_{S1}, b_{S2}, b_{S1}, b_{S3}, usw.. Durch die beschriebene Wahl der Schlitzbreiten fügt sich auf diese Weise eine Stoßfuge mit Fugenbreite von 2,7 mm nahtlos in das Muster der Schlitzbreiten ein und der Stoß zweier Akustikpaneele 2 ist im montierten Zustand nicht mehr erkennbar (nicht dargestellt). Darüber hinaus wird so besonders vorteilhaft die Änderung der Fugenbreite bei durch Feuchteschwankungen bedingten Dimensionsänderungen der Akustikpaneele optisch kaschiert.

Im dargestellten Beispiel nach Fig. 2 erstrecken sich die Schlitze 10 durch die Decklage 4 in die Mittellage 6. Entsprechend weisen die Schlitze 10 eine Schlitztiefe ts auf, die größer ist als die Dicke d_{L} der Lamellen 14 der Decklage 4. Weiterhin ist in dem gezeigten Beispiel eine Decklage 4 mit einer Dicke d_{L} von 8 mm gewählt, wobei die Dicke d_{M} der Mittellage 6 30 mm beträgt und die Dicke der Rücklage 8 d_{R} = 4 mm. Die Rücklage 8 ist als eine unbeschichtete Rohspanplatte mit einer der Mittellage 6 zugewandten Oberseite 28 und einer Unterseite 30 ausgebildet. Die Decklage 4 ist dagegen als beidseitig beschichtete Spanplatte mit Oberseite 12 und Unterseite 16 ausgebildet und zumindest auf der Oberseite 12 mit einem (Holz-)dekor versehen. Diese beidseitige Beschichtung der Decklage 4 verhindert den Verzug des Gesamtaufbaus, insbesondere bei Feuchteänderungen. Darüber hinaus können so herkömmliche Decklagen von Paneelen für das Akustikpaneel 2 verwendet werden.

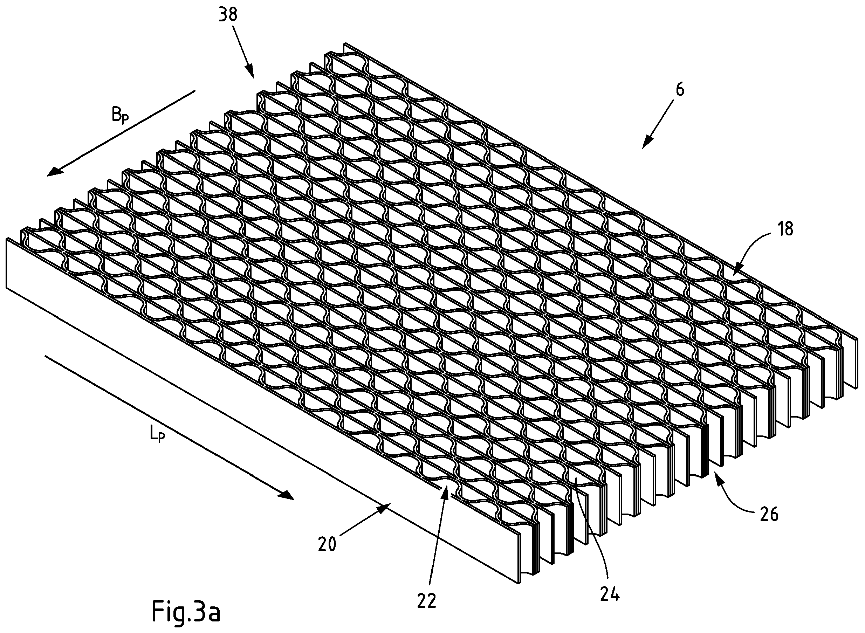

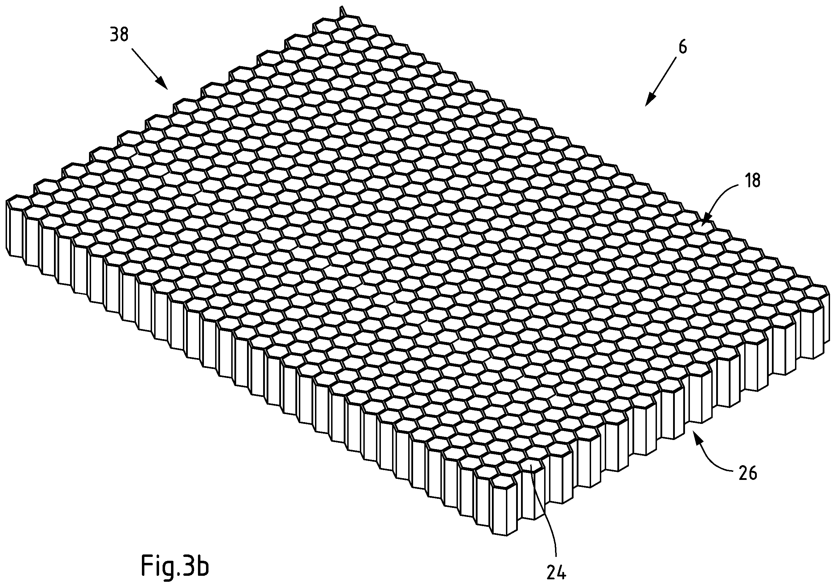

Als Mittellage 6 kann eine Honigwabenplatte (s. Fig. 3b) oder eine Sinuswabenplatte (s. Fig. 3a), beispielsweise aus Papier eingesetzt werden. Die Mittellage 6 weist eine Unterseite 26 auf, die der Rücklage 8 zugewandt ist, und eine Oberseite 18, die der Decklage 4 zugewandt ist.

Die Fig. 3a-b zeigen Ausführungsbeispiele von Mittellagen 6 eines erfindungsgemäßen Akustikpaneels 2 in einer perspektivischen Ansicht, wobei gemäß Fig. 3a die Mittellage 6 als Sinuswabenplatte aus Papier ausgebildet ist und gemäß Fig. 3b die Mittellage 6 als Honeycomb-Wabenplatte aus Papier ausgebildet ist.

Gemäß Fig. 3a verlaufen in der als Sinuswabenplatte ausgebildeten Mittellage 6 des Akustikpaneels 2 (s. auch Fig. 1) parallel angeordnete gerade Lagen 20, hier Papierlagen, alternierend mit sinus- bzw. wellenförmigen Lagen 22, so dass sich zwischen den Lagen 20, 22 Waben 24 ergeben. Die geraden Lagen 20 erstrecken sich jeweils parallel zur Längsrichtung L_{P} des Akustikpaneels 2. Die durch die geraden Lagen 20 und sinus- bzw. wellenförmigen Lagen 22 gebildete Struktur 38 ergibt eine schallabsorbierende Wabenstruktur, beispielsweise indem die einzelnen Waben der Wabenstruktur die einfallenden Schallwellen in viele kleine Teile aufbrechen und so dazu beitragen, dass der Schall seine Energie schneller verliert und absorbiert wird, anstatt reflektiert zu werden.

In Fig. 3b ist eine als Honeycomb-Platte ausgebildete Mittellage 6 dargestellt. Hier ergibt sich die als schallabsorbierende Struktur 38 dienende Wabenstruktur als geometrische Anordnung von den als Honigwabe 24 ausgebildeten Zellen. Eine solche Zelle als Grundeinheit der Wabenstruktur hat einen sechseckigen Querschnitt und entsprechend die Form eines sechseckigen Prismas (Hexagon). Weiterhin sind die Zellen regelmäßig angeordnet, so dass sie alle dieselbe Größe und Form haben und in einem gleichmäßigen Muster platziert sind. Wiederum, wie auch in Fig. 3a, sind die Waben orthogonal zur Ebene der Längs- und Breitenerstreckung der Mittellage 6, d.h. zur Ober- und Unterseite der Mittelage 6, geöffnet.

An der Ober- und/oder Unterseite kann die Mittelage 6 jedoch auch eine abdeckende Papierlage aufweisen, wodurch die Handhabbarkeit der Mittelage 6, beispielsweise durch einen Vakuumheber, vereinfacht wird.

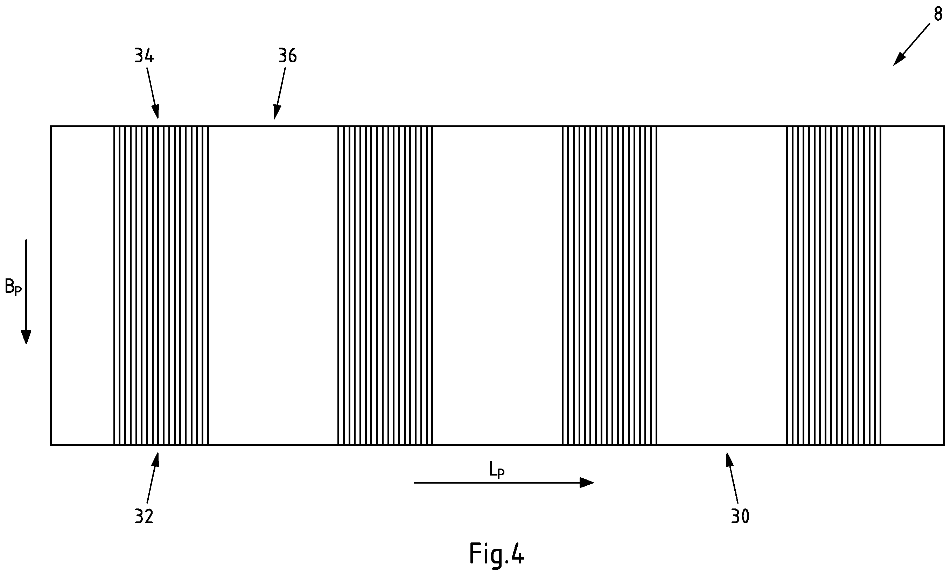

In Fig. 4 ist schließlich ein Ausführungsbeispiel einer Rücklage 8 eines erfindungsgemäßen Akustikpaneels 2 in einer Draufsicht von der Rückseite 30 gezeigt. Die Rückseite weist bereichsweise, hier in insgesamt vier nicht zusammenhängenden Bereichen 34, Ausnehmungen, hier in Form von Rückseitenschlitzen 32, auf. Die Rückseitenschlitze 32 sind vorliegend parallel zur Breite B_{P} des Akustikpaneels 2 und damit senkrecht zur Längserstreckung L_{P} und zu dem Verlauf der Schlitze 10 der Decklage 4 orientiert. Dies dient der verbesserten Stabilität des Akustikpaneels 2. Diese Schlitzung der Rückseite 30 der Rücklage 8 trägt weiterhin zur Verbesserung der akustischen Wirkung des Akustikpaneels bei.

Zwischen den geschlitzten Bereichen 34 sind Bereiche 36 angeordnet, die frei von Ausnehmungen sind und also eine plane Oberfläche aufweisen. Mittels dieser Bereiche 36 kann die Rücklage 8 und damit das Akustikpaneel 2 aufweisend diese Rücklage 8 einfach manipuliert werden, beispielsweise mittels eines Vakuumhebers.

## Patentansprüche

1. Akustikpaneel (2),
- mit einer Decklage (4),
- mit einer Mittellage (6), die eine schallabsorbierende Struktur (38) aufweist, und
- mit einer Rücklage (8),
- wobei die Decklage (4), die Mittellage (6) und die Rücklage (8) flächig übereinander angeordnet sind, wobei die Mittellage (6) zwischen der Decklage (4) und der Rücklage (8) angeordnet ist, und
- wobei die Decklage (4) Lamellen (14) mit dazwischen ausgebildeten Schlitzen (10) aufweist,
**dadurch gekennzeichnet,**
- **dass** die Schlitze (10) unterschiedliche Schlitzbreiten (b_{Si}) aufweisen.

2. Akustikpaneel (2) nach Anspruch 1,
**dadurch gekennzeichnet,**
- **dass** die Schlitze (10) zumindest drei unterschiedliche Schlitzbreiten (b_{Si}) aufweisen.

3. Akustikpaneel (2) nach Anspruch 1 oder 2,
**dadurch gekennzeichnet,**
- **dass** die Lamellen (14) der Decklage (4) eine Breite (b_{L}) zwischen 5 mm und 70 mm, bevorzugt zwischen 10 mm und 30 mm, besonders bevorzugt von 20 mm, aufweisen.

4. Akustikpaneel (2) nach einem der Ansprüche 1 bis 3,
**dadurch gekennzeichnet,**
- **dass** die Decklage (4) zumindest an ihrer Oberseite (12), bevorzugt beidseitig, beschichtet ist.

5. Akustikpaneel (2) nach einem der Ansprüche 1 bis 4,
**dadurch gekennzeichnet,**
- **dass** die Decklage (4) eine Dicke (d_{L}) zwischen 3 mm und 38 mm, bevorzugt zwischen 5 mm und 10 mm, besonders bevorzugt von 8 mm, aufweist.

6. Akustikpaneel (2) nach einem der Ansprüche 1 bis 5,
**dadurch gekennzeichnet,**
- **dass** die Schlitze (10) Schlitzbreiten (b_{Si}) zwischen 0,5 mm und 10 mm, bevorzugt zwischen 2 mm und 5 mm, besonders bevorzugt von 4 mm, 3,2 mm oder 2,7 mm, aufweisen.

7. Akustikpaneel (2) nach einem der Ansprüche 1 bis 6,
**dadurch gekennzeichnet,**
- **dass** die unterschiedlichen Schlitzbreiten (b_{Si}) der Schlitze (10) derart ausgebildet sind, dass die Abfolge aufeinanderfolgender Schlitzbreiten (b_{Si}) entsprechend dem sich wiederholenden Muster b_{S1}, b_{S2}, b_{S1}, b_{S3} gewählt ist, wobei b_{S1} > b_{S2} > b_{S3} gilt.

8. Akustikpaneel (2) nach einem der Ansprüche 1 bis 7,
**dadurch gekennzeichnet,**
- **dass** die unterschiedlichen Schlitzbreiten (b_{Si}) der Schlitze (10) weiter derart ausgebildet sind, dass der in einer Richtung im Wesentlichen senkrecht zur Erstreckungsrichtung der Schlitze (10) erste Schlitz (10) eine erste Schlitzbreite b_{S1} aufweist und der in dieser Richtung nachfolgend angeordnete Schlitz (10) eine zweite Schlitzbreite b_{S2}, und
- optional, dass die Abfolge der Schlitzbreiten (b_{Si}) relativ zum mittig angeordneten Schlitz (10) mit der zweiten Schlitzbreite b_{S2} des Akustikpaneels (2) spiegelsymmetrisch gewählt ist.

9. Akustikpaneel (2) nach einem der Ansprüche 1 bis 8,
**dadurch gekennzeichnet,**
- **dass** die Schlitze (10) sich durch die Decklage (4) in die Mittellage (6) erstrecken.

10. Akustikpaneel (2) nach einem der Ansprüche 1 bis 9,
**dadurch gekennzeichnet,**
- **dass** die Mittellage (6) eine Wabenstruktur aufweist.

11. Akustikpaneel (2) nach einem der Ansprüche 1 bis 10,
**dadurch gekennzeichnet,**
- **dass** die Mittellage (6) im Wesentlichen aus einem Papier-basierten Material besteht.

12. Akustikpaneel (2) nach einem der Ansprüche 1 bis 11,
**dadurch gekennzeichnet,**
- **dass** die Decklage (6) im Wesentlichen aus einem Holz- und/oder Papier-basiertem Material besteht, insbesondere als beschichtete Spanplatte ausgebildet ist.

13. Akustikpaneel (2) nach einem der Ansprüche 1 bis 12,
**dadurch gekennzeichnet,**
- **dass** die Rücklage (8) im Wesentlichen aus einem Holz- und/oder Papier-basiertem Material besteht, insbesondere als unbeschichtete Spanplatte ausgebildet ist.

14. Akustikpaneel (2) nach einem der Ansprüche 1 bis 13,
**dadurch gekennzeichnet,**
- **dass** die Rücklage (8) eine Dicke d_{R} zwischen 2 mm und 30 mm, bevorzugt zwischen 2 mm und 10 mm, besonders bevorzugt von 4 mm, aufweist.

15. Akustikpaneel (2) nach einem der Ansprüche 1 bis 14,
**dadurch gekennzeichnet,**
- **dass** die Rücklage (8) zumindest bereichsweise Ausnehmungen (32) aufweist.

16. Verfahren zur Herstellung eines Akustikpaneels (2) nach einem der Ansprüche 1 bis 15,
- bei dem die Decklage (4), die Mittellage (6) und die Rücklage (8) miteinander verbunden, insbesondere verklebt, werden,
- bei dem optional Ausnehmungen (32) in die Unterseite (30) der Rücklage (8) eingebracht werden, und
- bei dem Schlitze (10) in die Oberseite (12) der Decklage (4) eingebracht werden, wobei sich die Schlitze (10) optional bis in die Mittellage (6) erstrecken.

17. Verwendung eines Akustikpaneels (2) nach einem der Ansprüche 1 bis 15 als Raumverkleidung, insbesondere (Trenn-)Wand- und/oder Deckenverkleidung.

18. Verwendung nach Anspruch 17,
**dadurch gekennzeichnet,**
- **dass** die Befestigung des Akustikpaneels (2) an einer Unterkonstruktion mittels Profilkrallen erfolgt.

19. Anordnung umfassend zumindest zwei Akustikpaneele (2),
**dadurch gekennzeichnet,**
- **dass** die Akustikpaneele (2) jeweils nach einem Akustikpaneel (2) nach einem der Ansprüche 1 bis 15 ausgebildet sind,
- wobei jeweils zwei Akustikpaneele (2) der zumindest zwei Akustikpaneele (2) derart zueinander angeordnet sind, dass sich zwischen den Akustikpaneelen (2) eine Fuge mit einer Fugenbreite ergibt, die einer Schlitzbreite (b_{Si}) der unterschiedlichen Schlitzbreiten (b_{Si}) der Schlitze (10) entspricht.

20. Anordnung nach Anspruch 19,
**dadurch gekennzeichnet,**
- **dass** die Anordnung weiter zumindest eine Profilkralle umfasst, die derart ausgebildet ist, dass sie die Fuge zwischen zwei Akustikpaneelen (2) auf eine Fugenbreite festlegt, die einer Schlitzbreite (b_{Si}) der unterschiedlichen Schlitzbreiten (b_{Si}) der Schlitze (10) entspricht.
